# EUROPEAN PATENT SPECIFICATION

(11) **EP 1 017 207 B1**
(45) Date of publication and mention of the grant of the patent: **03.05.2006**
(21) Application number: 99310386.0
(22) Date of filing: 21.12.1999
(51) Int. Cl.: H04L 29/06, H04L 12/28

(54) **Radio link with dynamic adaptation**
Funkstrecke mit dynamischer Anpassung
Liaison radio avec adaptation dynamique

(30) Priority: 30.12.1998 US 257319
(43) Date of publication of application: 05.07.2000
(73) Proprietor: Nortel Networks Limited, St.Laurent, Quebec H4S 2A9 (CA)
(72) Inventor: Gage, William Anthony, Stittsville, Ontario K2S 1C9 (CA); Janevski, Goran, Nepean, Ontario K2G 5C2 (CA); Sonti, Jagdish, Ottawa, Ontario K2B 8J6 (CA)
(74) Representative: Maury, Richard Philip

(56) References cited:
- EP-A- 0 427 687
- EP-A- 0 483 551
- EP-A- 0 622 924
- EP-A- 0 732 863
- WO-A-95/17724
- WO-A-98/46033
- US-A- 5 559 804
- US-A- 5 703 934

## Description

### BACKGROUND OF THE INVENTION

### Field of the invention

The present invention relates to radio link protocols and more particularly to a dynamic data link adaptation for a wireless communication system.

### Background information

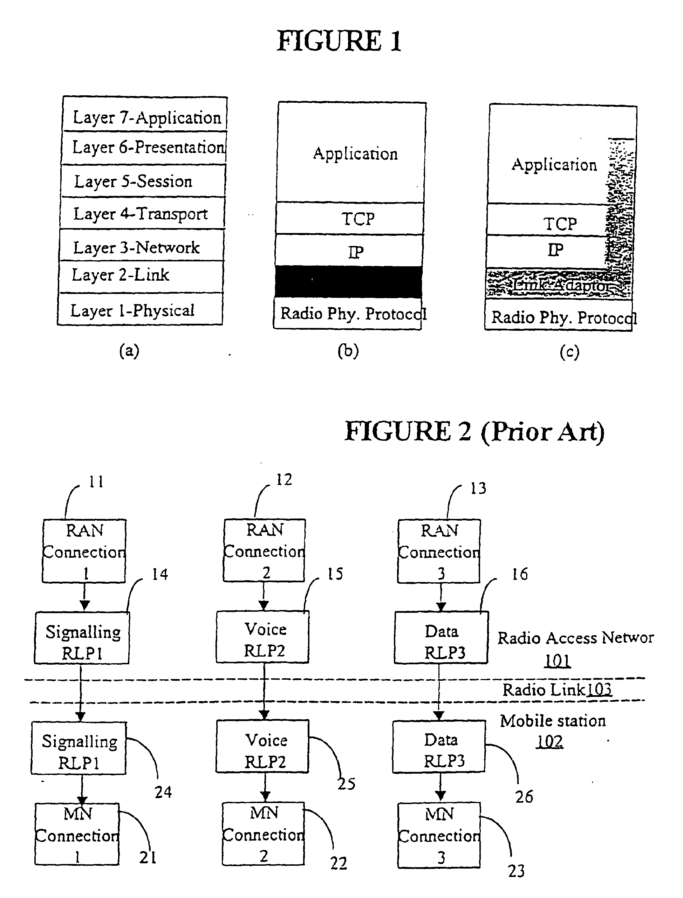

Layering, or layered architecture is a form of hierarchical modularity that is central to data network design. A layer performs a category of functions or services. All major emerging communication technologies rest on the layers of the OSI model, illustrated in Figure 1-a. The OSI model defines a physical layer (Layer 1) which specifies the standards for the transmission medium, a data link layer (Layer 2), a network Layer 3 and application layers (layers 4 to 7).

**Physical Layer**. The function of the physical layer is to provide a physical pipe, i.e. a communication link for transmitting a sequence of bits between any pair of network elements joined by a physical communication channel. E.g. in the case of wireless networks, this is the channel that physically transports the information between the mobile station (MS) and the base transmission station (BTS), or between the BTS and the mobile switch center (MSC).

**Link Layer**. Each point-to-point communication link has data link control modules at each end of the link. The purpose of these modules is to exchange information elements (IE), using the physical layer.

Link protocols are a recognized mechanism used within the wired and wireless communications industries to mitigate the effects of impairments introduced by the physical transmission medium. A radio link protocol (RLP) is one that is designed for the wireless environment to deal specifically with the types of impairments found on the radio link between a mobile station (MS) and the radio access network (RAN). The detailed mechanisms employed by an RLP are usually specific to a particular air interface protocol (AIP) and are tailored to the services supported by that AIP. In general, a link protocol may provide mechanisms to deal with errors on the communications link, delays encountered in transmitting information over the communications link, information lost while transmitting over the communications link, bandwidth conservation and contention resolution.

All these AIPs define a limited number of RLPs and select the RLP for a connection during the connection setup phase based on the service requirements. The service is defined by the type of information (ToI) transmitted (i.e. voice, packet data, control packet, etc.) and by the quality of service (QoS) required. Generally speaking, the quality of service (QoS) of a particular type of service (ToS) is dependent upon the errors encountered over the communication link, the delays encountered in transmitting the information, and/or the information lost while transmitting over the communications link.

As discussed above, a radio link protocol may provide mechanisms to deal with all type of impairments introduced in the radio link by the physical transmission medium. Thus, error control schemes are currently designed for error detection only, error detection and forward error correction, or error detection and retransmission. Current delay control schemes include expedited delivery, bounded delay or unbounded delay, while loss control schemes may include assured delivery, best-effort delivery, or relay service (no recovery). Current bandwidth conservation schemes may include packet header compression, generic payload compression, or application specific compression, and contention resolution schemes may include randomized backoff interval followed by retransmission, channel reservation, round-robin or priority-based polling or adaptive power stepping followed by retransmission. This list of protocol functions is by no means exhaustive.

**Network Layer.** The third layer is the network layer which is responsible for routing packets from one network node to another. The network layer takes upper layer data units (packets), adds routing information to the packet header, and passes the packet to the link layer.

**Transport Layer.** The fourth layer is the transport layer which creates virtual end-to-end connections using network layer addressing and routing capabilities. This layer has a number of functions, not all of which are necessarily required in any given network. In general, this layer is concerned with assembling/ reassembling of data units, multiplexing/demultiplexing, end-to-end error correction, flow control, etc.

The Transmission Control Protocol (TCP) shown in Figure 1b as the transport layer, has evolved over many years of use in the wired local area network (LAN) and wide area network (WAN) arenas. However, many of the algorithms used to optimize the performance of TCP in the wired environment are based on some underlying assumptions about the wired network where the TCP is typically used.

### Wired and wireless environment.

In a wired network the bit errors rates are typically on the order of 10⁻⁹ or better, and bit errors have a tendency to be random. In general, the transmission medium is considered essentially error-free and TCP packets are lost mainly due to congestion in the intervening routers. Moreover, in a wired system the transmission channel has a constant bandwidth and is symmetrical; therefore, the characteristics of the channel in one direction can be deduced by looking at the characteristics of the channel in the other direction.

Due to the practically error-free environment of the wired networks, it is often easiest to use a common link control protocol and to solve congestion problems by "throwing bandwidth at the problem", to remove queuing bottlenecks by using higher speed transmission channels.

On the other hand, in a wireless environment, most of the above assumptions are no longer valid. The wireless channel is characterized by a high bit error rate with errors occurring in bursts that can affect a number of packets. Due to fading, due to the low transmission power available to the mobile station and to the effects of interference, the bandwidth of the channel appears to rapidly fluctuate over time resulting in a radio link that is not symmetrical.

In a wireless environment, the amount of bandwidth available to the system is fixed and scarce. Adding bandwidth on the radio link may be expensive or even impossible due to regulatory constraints.

For example, optimizing bulk file transfer in a wired environment is simply a matter of allocating as much bandwidth as possible to the connection. In a wireless environment, part of the bandwidth is used in error correction. It is known that more error correction means less payload, however, more error correction increases the probability of correct delivery without retransmissions. Thus, end-to-end throughput may actually be increased by reducing bandwidth assigned to payload and using the freed bandwidth for error correction.

Wireless network solutions targeted specifically at packet data using the Transmission Control Protocol (TCP) have been proposed but they suffer from a number of problems as they are generic to TCP with no distinction made between the requirements of the different applications that use TCP, and with no knowledge of the capabilities provided by different link and application layer protocols.

Another problem associated with the use of the TCP in a wireless network relates to a link layer which works independently of the TCP layer with no intrinsic knowledge of the control and information packet requirements of TCP. The link layer protocol may use mechanisms e.g. automatic retransmissions of lost or corrupted packets, that either duplicate or interfere with mechanisms used by TCP.

Priority-based queuing algorithms as well as parameter controlled behavior for use by RLPs have been also proposed. Priority-based queuing algorithms for use by RLPs are limited in their applicability to problems that can be solved with different queuing algorithms. Parameter controlled behavior as a means to modify the behavior of an RLP according to the values assigned to input parameters, is limited by initial decisions on which parameters are dynamic and which are not. The fundamental behavior of the RLP can not be changed and therefore, any new functions that require a new set of parametric values may be difficult to introduce. Moreover, application-specific functions can not be easily introduced.

### Multimedia wireless communications

In the multimedia communications world, different applications have different QoS requirements with respect to bandwidth, delay, assured delivery, etc. Therefore performance of a multimedia protocol can be enhanced by using mechanisms specifically designed to overcome the impairments found in the prior art.

Current second generation (2G) wireless systems are designed mostly to handle voice traffic, with some allowances for circuit-switched data. Later, packet data services were grafted onto the 2G systems but these were uniformly treated according to "best effort delivery" schemes. The type of RLP (radio link protocol) used in 2G systems is typically based on the generic service(s) available to the MS(mobile station), as for example voice services, packet data services, and/or circuit switched data services. The voice service may use an RLP providing error detection and forward error correction, the packet data service may use an RLP providing error detection and retransmissions, while the circuit switched data service may use an RLP providing transparent bit service.

The introduction of multimedia communications in third generation (3G) wireless systems means the traffic no longer has a set of homogenous characteristics and as a result, many of the protocols for 2G wireless systems suffer from a number of design problems.

Existing wireless implementations define a limited number of RLPs (radio link protocols). The RLP for a connection is currently chosen during the connection setup phase and remains tied to the service category for the duration of the connection. To change the type of RLP, the connection must be terminated and a new connection with a different type of RLP has to be established.

Furthermore, RLP selection is currently based on the type of service (ToS) requested (e.g. voice, best effort packet data) and assumes that all services within a category have the same basic quality of service (QoS) requirements and this does not change over time. An RLP operates independently, without knowledge of the transport protocol or application requirements, and the same RLP remains in effect throughout the life of the connection, even though the requirements of the information flow may change.

Moreover, the current RLPs treat all information the same, assuming the same type of service (ToS) requirements applies to all information elements (IE). For example, in a packet mode connection, control packets that regulate the flow of information should be accorded a higher priority and greater assurance of correct delivery than data packets themselves, but they are presently treated equally. Also, RLPs are typically defined during the standardization process and no provision is made for adding a new type of information flow or a new type of service (ToS) category and its corresponding RLP. With the rapid introduction of new applications into wireless and packet data arenas, these applications may be forced to use an RLP that approximately, but does not quite, fit the application's service requirements.

Accordingly, there is a need for a providing a dynamic link layer for a multimedia wireless communication system which fits a plurality of type of service (ToS) categories of an application, and is capable to recognize different quality of service (QoS) requirements within a category.

### SUMMARY OF THE INVENTION

The present invention provides an improved end-to-end quality of service (QoS) for multimedia wireless communications.

According to one aspect of the invention there is provided a radio link system as claimed in Claim 1. According to a second aspect of the present invention there is provided a radio link system as claimed in Claim 9. According to a further aspect of the invention there is provided a method for multimedia communication as claimed in Claim 10.

The radio link system for multimedia communication between a radio access network (RAN) and a mobile station (MS) is provided for establishing a connection under RAN monitoring. A RAN connection of a communication link is used for transmitting an information element (IE) having a particular IE type of service requirements, to a plurality of RAN radio link adapter (RLA) components. Each RAN RLA is associated with a type of service and is capable of adapting the IE to a RAN frame format comprising connection information and RLA information associated with the transmitted IE. A flow analyzer is also provided to monitor the communication link, to procure the IE type of service from the RAN connection, to select a RAN RLA component with a RLA type of service substantially the same as the IE type of service and to dynamically allocate the selected RAN RLA component to the RAN connection.

According to another aspect of the invention, a radio link system for multimedia communication between a mobile station (MS) and a radio access network (RAN) for establishing a communication link between the MS and the RAN under the MS monitoring of the connection, is provided. A MS connection of a communication link is used for transmitting an information element (IE) according to a type of service requirements, to a plurality of MS radio link adapters. Each MS RLA is capable of adapting the IE to a MS frame format for transmission over the communication link to a paired RAN RLA. Both the MS RLA and the RAN RLA are selected in accordance with the quality of service (QoS) requirements associated with the IE.

According to still another aspect of the invention, a method for multimedia communication between a radio access network (RAN) and a mobile station (MS) is provided. A communication link for transmitting an information element (IE) according to a IE type of service requirements from a connection in the RAN to a mate connection in the MS, is initially established. The connection is constantly monitored at the originating end, for detecting the IE type of service requirements for a current transmission operation on the communication link. A plurality of radio link adapters (RLA) are also provided, each RLA associated with a RLA type of service for loading the IE into a RLA frame format comprising destination connection information associated with the type of IE. According to each IE type of service requirements identified, an RLA component associated with the IE type of service identified is dynamically allocated to the originating connection end. The destination connection information contained in the RLA frame includes a connection identifier and an RLA identifier for selecting and allocating at the other end of the connection a second RLA component having the same RLA type of service. Either the RAN or the MS can monitor the communication link.

Advantageously, according to the invention, the dynamic selection of the type of RLA to transport information is performed without having to tear-down and re-create a connection. The transport of the information flow of a specific type of service over the radio link is optimized and an end-to-end quality of service (QoS) is maintained.

The invention uses link adaptation techniques that are specifically tailored to the needs of a particular type of information flow, or of a particular end-to-end transport protocol. The operation of each RLA may be tailored to provide services that closely match the requirements of a specific end user or of a particular information flow, or of a type of service. RLA selection may be based on the end user's profile, on the type of service selected, on the changing characteristics of the information flow, on the type of information element detected within the flow, and/or on the current conditions of the radio link.

Other aspects and features of the present invention will become apparent to those skilled in the art upon review of the following description of specific embodiments of the invention in conjunction with the accompanying drawings.

### DESCRIPTION OF THE DRAWINGS

**Figures 1-a** to **1-c** show the OSI model and its application to this invention. Figure 1-a shows the OSI layers in general; Figure 1-b shows the link layer affected by the link protocol; and Figure 1-c shows the area of operation for a link adapter in the open systems interconnect model;
**Figure 2** illustrates an example of radio link protocol architecture for a current wireless multimedia communications system;
**Figure 3** is a functional block diagram showing the allocation of a radio link adapter to a connection, according to the invention;
**Figure 4** is a functional block diagram for a wireless multimedia communications system using the dynamic radio link adaptation according to the invention;
**Figure 5** illustrates an example of a radio link adapter frame formed according to the invention; and
**Figure 6** is a flow chart used to illustrate the steps of the radio link adaptation according to the invention.

### DETAILED DESCRIPTION OF THE EMBODIMENTS

Figures 1-a to 1-c show the OSI model and its application to this invention. Figure 1-a show the OSI layers in general, and Figure 1-b show the OSI layer affected by the link protocol. As shown in Figure 1-b, a link protocol typically only operates at Layer 2 the link layer, of the protocol stack. The link protocol provides a fixed set of services to Layer 3 the Network Layer, and has no knowledge of the protocols used outside Layer 2.

The present invention provides a method and apparatus for improving the quality of service (QoS) for multimedia communications over a radio link, while giving priority to correctly delivering acknowledgments for information already received. According to the invention, a radio link adapter (RLA) is designed to provide services that closely match the type of service (ToS) requirements and that can be dynamically selected to transport information without having to recreate a connection.

A link adapter may operate at any and all levels of the protocol stack used between the sender and the receiver. In practical terms, this means that the link adapter of the invention extracts information from anywhere in the communications environment and manipulates any of the protocols used between the sender and the receiver, as shown in Figure 1-c.

The radio link adapter concept falls into a general class of protocol enhancement techniques known as "protocol boosters" that are designed to provide improved end-to-end protocol performance without changing the semantics of the end-to-end protocol. Thus, while the effects of the RLA protocol booster may be apparent to the communicating end points, e.g. improved throughput, the mechanisms and protocols used internally by this RLA protocol booster are transparent to the end points.

The "boosters" known in the art so far are static boosters. Dynamic selection of an RLA allows the wireless system to determine the service requirements of an information flow and to quickly change the way that service is provided, as the needs of the flow change and as the conditions on the radio link change. The latter is particularly important in a wireless environment. Protocols that are in widespread use today, like the Transmission Control Protocol (TCP), have been developed for use in a wired environment where the link is very stable. However, the conditions on the radio link fluctuate rapidly due to fading and interference and therefore, the wireless system must be able to react quickly to shield protocols like TCP from those changes and to maintain the end-to-end quality of service (QoS).

Figure 2 illustrates a radio link protocol architecture illustrating a sample current network, showing a radio access network (RAN) **101** and a mobile station (MS) **102**. For each type of service (ToS), a communication link is established between RAN **101** and mobile **102** over air interface **103**.

The end of each link is intuitively shown in RAN **101** by connection units 1-3 denoted with **11, 12**, and **13**, linked with corresponding connections **21, 22**, and **23** in MS **102**. The term "connection" is used to designate a unidirectional facility/mechanism that allows information to be exchanged between two or more points in a communication network. It includes both circuit and packet modes of communications.

Three different types of radio link protocols (RLPs) are illustrated in Figure 2, each having a RAN component and a MS component. These are a signaling RLP **14, 24**, a voice RLP **15, 25** and a packet data RLP **16, 26**. Signaling RLP **14, 24** is designed to handle high-priority, packet-based signaling traffic between the RAN and the MS. Voice RLP **15, 25** is designed to transport voice traffic between the RAN and the MS. Packet data RLP **16**, **26** is designed to transport packet data traffic between the RAN **101** and the MS **102** on a "best effort" basis.

The following steps are currently performed for sending information from RAN **101** to MS **102**.
a. A higher level entity (not shown) requests that a signaling connection **11** be established to transport information between the RAN **101** and the MS **102**. No further information is needed since the quality of service (QoS) afforded by connection **11** is dictated by the type of traffic, which is signaling in this example, and the RLP **14** is defined a priori to carry this traffic.
b. RAN **101** indicates to MS **102** that a signaling connection is required and they handshake using the air interface protocol (AIP) to establish the corresponding connection **21** in MS **102** along with its corresponding RLP **24**.
   A voice connection **12, 22** is created in a similar way through the voice RLPs **15, 25**, and a packet data connection **13, 23** is created through the packet data RLPs **16, 26.**
c. Once the connections have been established, when information is to be sent from the RAN **101** to the MS **102**, a higher-level entity (not shown) determines the type of information (ToI) to be sent (signaling, voice, or packet data), and enqueues the information to be transmitted over the appropriate connection **11, 12** or **13**, respectively.
d. All signaling information sent on connection **11** is delivered using RLPs **14** and **24** regardless of whether the information represents a high priority connection control message, or a low priority location management message.

Similarly, all voice information sent on connection **12** is delivered using RLPs **15** and **25** regardless of whether the information represents an active speech spurt or background noise. It is to be noted that the channel coding used for an active speech spurt is different from that used for background noise. This may be considered a primitive form of dynamic radio link adaptation.

All information transmitted over the RAN connection **13** is delivered to MS connection **23** using the data RLPs **16** and **26**, regardless of the characteristics of the information flow. For example, bulk file transfer often considered a "low priority" activity, uses the same RLPs **16** and **26** as an interactive query, which is considered a "high priority" activity.

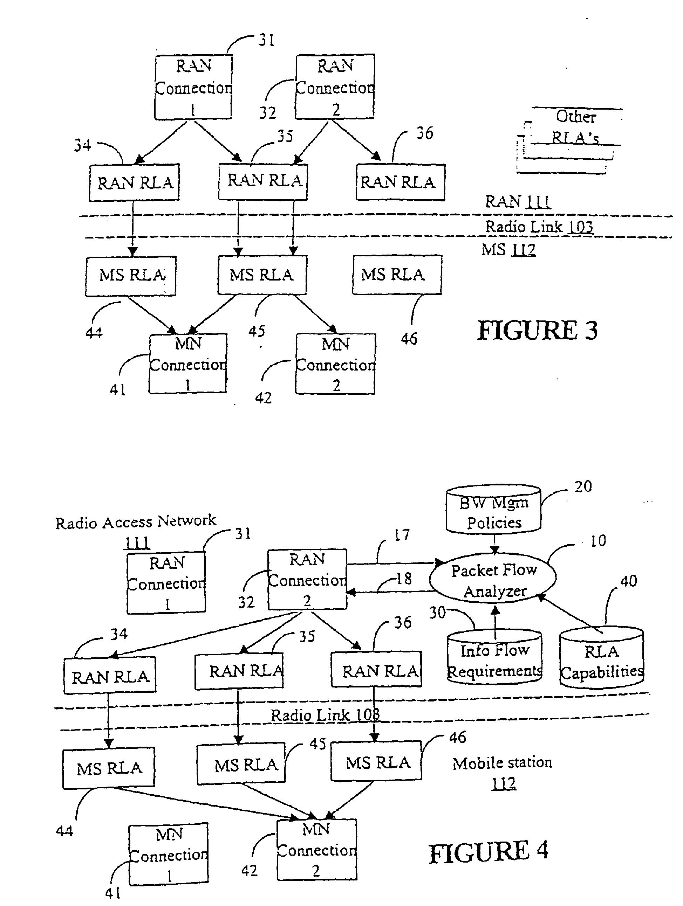

By contrast, Figure 3 is a functional block diagram showing the dynamic allocation of a radio link adapter (RLA) to a connection in a wireless multimedia communications system. The system of Figure 3 includes a number of radio link adapters (RLAs) namely RLAs **34** - **36** in the radio access network (RAN) **111** paired with RLAs **44** - **46** in the mobile station (MS) **112**. Each RLA communicates with its pair instance. For example, the RLA **34** in the RAN **111** only communicates with the RLA **44** in the MS **112**, RLA **35** with RLA **45**, and RLA **36** with RLA 36.

Each adapter is associated with a particular type of service (ToS). Figure 3 illustrates RAN adapters **34**-**36**, as well as MS adapters **44**-**46**, but any number of other RLAs may also exist, as needed.

For connections from RAN **111** to MS **112,** RLA selection is accomplished through the following procedure:

A connection **31** is initially created in RAN **111** to transport information from the RAN **111** to a connection **41** in the MS **112**.

Based on information either included in the connection setup request, or derived from the MS **112** profile, or negotiated between the MS **112** and the RAN **111**, an initial service requirement is determined, and a corresponding RLA pair, let's say RLA **35** and RLA **45**, is identified. Other connections between the RAN **111** and the MS **112** may also exist, like for example connection **32**-**42**, and may use the same adapter type, or a different type of RLA.

As RAN **111** exchanges information with the MS **112**, the RAN monitors connection **31** (and all other active connections) to determine if the service requirements of the connection **31** are still being met by the RLA **34**.

If RAN **111** determines that the service requirements of an individual information element, e.g. a control packet, cannot be satisfied by the adapters **35** and **45** currently used, the information element (IE) is directed to another RLA that can provide the appropriate type of service (ToS), e.g. to the RLA pair **34, 44**. Other information elements (IEs) continue to flow through the RLA **35**. At the MS **112**, all information elements (IEs) are directed to connection **41** regardless of the adapters used to deliver the information element (IE) between the RAN **111** and the MS **112** connections.

If RAN **111** determines that the service requirements of the entire connection cannot be satisfied by the currently used adapters, all future information elements meeting the new type of service (ToS) traveling over connection **31**-**41** are redirected to an adapter that can satisfy the requirements.

The selection of a new adapter may be triggered by any one of a number of mechanisms. These mechanisms may include an explicit request from the MS **112** received either over a separate signaling connection or in-band over the same connection used to carry information elements. A new adapter could be selected based on an analysis of the dynamic traffic characteristics exhibited by the information flowing over the connection, or the interpretation of the information or portions of the information elements like control information contained in an information element header. Selection can also be made based on the recognition/identification of a particular information element carried over the connection e.g. an "open file" request, or based on the current conditions on the radio link, e.g. changes in congestion or bit error rate.

For establishing a connection from the MS **112** to the RAN **111**, a similar process takes place but with the roles reversed. The MS **112** monitors the connection and initiates changes in the adapters being used.

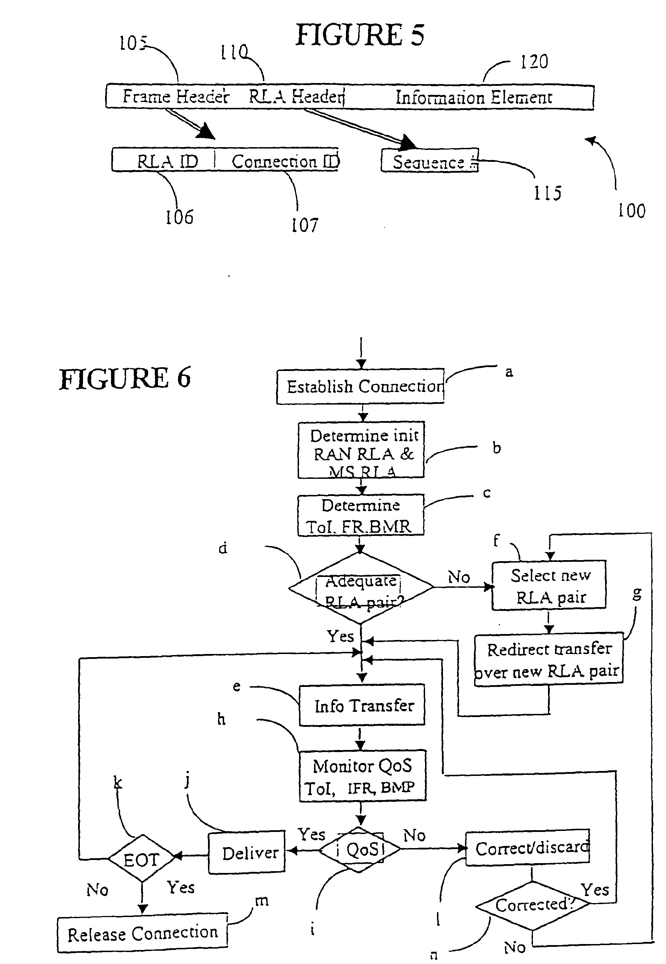

Figure 4 is a functional block diagram showing a wireless multimedia communications system using dynamic radio link adaptation. The particular example shown in this figure refers to a bulk file transfer application, and it is described using also Figures 5 and 6. Figure 5 illustrates an example of a radio link adapter frame according to the invention, while Figure 6 is a flow chart used to illustrate the method steps of the radio link adaptation.

Each of the radio access network **111** and the mobile station **112** includes instances of radio link adapters (RLAs) **34** - **36**, and respectively **44** - **46**, each RLA pair being associated with a particular type of service (ToS). Thus, RLA **34** in the RAN **111** only communicates with RLA **44** in the MS **112**, RLA **35** with RLA **45**, and RLA **36** with RLA **46**. The capabilities of each RLA are tailored to optimize the transportation of a specific information or class of information flow over the radio link **101**. It is to be understood that the number of RLA pairs could be higher than three, depending on the services available to the respective network and the mobile station (MS).

Figure 4 shows again only two connections, namely connection **31** - **41** and connection **32** - **42**. Each RAN connection is continuously monitored by a packet flow analyzer **10** for determining the type of service over the respective connection; if the current RLA associated with the connection can satisfy the required quality of service (QoS); and if not, if there is another RLA which could.

Packet flow analyzer **10** has knowledge of information flow requirements (IFR) for each connection, which are stored in a database **30**. Analyzer **10** also uses a database **20** with bandwidth management policies (BMP), the policies being associated with the end user and/or the wireless system operator. In addition, the RLA capabilities are stored in database **40**.

Packet flow analyzer **10** monitors the information flow over each RAN connection, shown by arrow **17**. Analyzer **10** also controls how the information flowing through the connection **32** should be transported over the radio link **103** to MS **112**, shown by arrow **18**.

Figure 6 illustrates the steps of a radio link adaptation performed by the adapter of Figure 4, and using radio link adapter frames as illustrated in Figure 5, all according to the invention.

### Connection setup

In this example using a bulk file transfer, the operation begins with a higher-level entity (not shown) requesting a connection, step **a**, for linking the RAN **111** and the MS **112**. Let's say that a connection **32** is established in RAN **111**. Based on information either included in the connection setup request, or derived from the MS **112** profile, or negotiated between the MS **112** and the RAN **101**, an initial service requirement is determined, and RLA **34** is identified for use by connection **32**, as shown in step **b**.

The RAN **111** indicates to the MS **112** that a connection is required and they handshake using the air interface protocol (AIP), to establish the corresponding connection **42** in MS **112**, along with its corresponding RLA **44** step **b**.

### RLA selection

The packet flow analyzer **10** receives monitoring data **17** related to connection **32** - **42**, as shown in step **c**. Packet flow analyzer **10** determines that the information being carried on this connection is a part of a bulk file transfer, in this example. Flow classification may be based on the content of information elements (IEs) like well-known protocol identifiers found in a packet header, or on the dynamic behavior of the flow like the size and frequency of the packets, or on the network configuration parameters like the physical link identifier, or on the node address.

The analyzer **10** uses the RLA capabilities database **40** to compare the capabilities of the RLA **34** to the information flow requirements **30** and to the bandwidth management policies **20** of the system, step **d**. Let's say that, from this comparison, analyzer **10** determines that the type of service (ToS) requirements of the bulk file transfer information flow on connection **32** - **42** cannot be satisfied by the RLA **34**, but can be satisfied by the RLA **35**, shown by branch "No" of decision block **d**.

The packet flow analyzer **10** sends a control signal **18** instructing connection **32** - **42** to select a new type of RLA pair **35** - **45** for example, if it is more adequate for the type of service (ToS) requested, step **f**, and redirects all its information elements to this RLA pair, shown in step **g**.

If the type of service can be handled satisfactory by the RLA pair **34** - **44**, as shown by branch "Yes" of decision block d, a new RLA pair is not selected, and the transfer of information continues over the first RLA pair **34 - 44.**

### Information transfer

The RLA pair **35** - **45** (or the like) allocated to a required ToS (Type of Service) then performs any operations defined by its behavior, including modifications or additions to the original information element, and then initiates transmission of RLA frames over the Radio Link **103** to the MS **112**, step **e**.

A RLA frame **100** is shown in Figure 5 as an example. Frame **100** includes a frame header **105**, an RLA header **110**, and an information element (IE) **120**. A field **106** in frame header **105** is used by the MS **112** to determine which radio link RLA should receive the information element (IE). In the example of Figure 4, field **106** will reference the RLA **45**.

RLA **45** uses a connection identifier **107**, also contained in the RLA frame header **105**, to determine which connection should receive the information element. In this case, the identifier **107** will reference connection **42**.

### Monitoring OoS

The information elements received by RLA **45** are regularly examined to ensure that they conform to the quality of service (QoS) associated with this RLA, steps **h** and **i**.

Information for use by the RLA pair **35, 45** may be contained in an RLA header **110** associated with the RLA frame **100**. The format and content of the RLA header **110** is RLA-specific and forms part of a protocol that originates with the RAN RLA **32** and terminates on the MS RLA **42**.

For example, let's say that the service provided by the RLAs **35, 45**, requires to deliver all frames to connection **42** in the same order they were transmitted. In this case, a sequence number could be added to the frame by the RAN RLA **35** in field **115**, and used by the MS RLA **45** to determine the correct position of the information element (IE) within the connection.

In the case of a bulk file transfer information flow, the QoS may include assured delivery of the information elements. Frames **100** are examined in steps **h** and **i** to check if they have been received without errors. Information elements (IEs) meeting the QoS (quality of service) defined by the RLA **45** are delivered to the appropriate connection **42**, step **j**. If information elements (IEs) do not correspond to the QoS requested, the RLA instances **35, 45** interact using a protocol or other mechanisms unique to this RLAs, to overcome the radio link impairment, shown in step **l**.

If RLA instances **35, 45** cannot overcome the radio link impairments in order to provide an information element (IE) with the required QoS, the treatment accorded non-conforming information elements is dependent on the exception-handling behavior defined for the RLA **34**. This may include silently discarding the information element (IE); discarding the information element (IE) and signaling an error to the connection **42**; forwarding the information element (IE) as-is to the connection **42** along with a warning that the element (IE) does not meet the ToS criteria of the respective RLA; forwarding the information element (IE) as-is to connection **42** with no warning; or terminating the connection **42**. In the case of bulk file transfer, the exception-handling behavior for RLA **45** may be "silently discard", knowing that the higher-level TCP incorporates its own retransmissions mechanisms , step **p**.

Steps k and m show the end of information transfer (EOT) and of the connection.

### Changing the type of RLA

The RLAs are dynamically assigned to a connection. The current RLA pair may be changed for one of many reasons.

At some point during information transfer, the higher-level entity (not shown) sends a TCP acknowledgment packet over connection **32** - **42**. The packet flow analyzer **10** receives monitoring data **17** related to connection **32** and determines that the acknowledgment is a control element that must be treated differently from the other information elements (IEs) comprising the bulk file transfer.

In this case, the packet flow analyzer **10** selects a new type of RLA that can satisfy the requirements of the connection, step **f**, and sends control signal **18** instructing RAN connection **32** to redirect the control element to RLA **34**, step **g**. Other information elements (IEs) will continue to flow through the RLA **35**. The RLA is changed when the type of information (ToI), or the quality of service (QoS) requirements change.

As indicated above, analyzer **10** monitors continuously the flow of information, steps **c** and **d** and the RLAs attempt to overcome some or all of the failure in service of the transmission. The packet flow analyzer **10** compares the capabilities of the RLA **35** to the information flow requirements (IFR) **30** and to the Bandwidth Management Policies (BMP) **20** of the system, step **d**. Let's say that from these data, the analyzer **10** determines that the QoS requirements of the information elements cannot be satisfied by the RLA **35** but can be satisfied by the RLA **36**, branch "No" of decision block **d**.

At the MS **112**, the RLA identifier **106** is used to determine that this radio link adapter frame should be processed by the MS RLA **46**. The received information element is examined by the MS RLA **46** to ensure that it conforms to the QoS requirements associated with it, steps **i**. If it does not, e.g. due to errors on the radio link or congestion in the RAN **111**, the RAN RLA **36** and the MS RLA **46** components interact to overcome the radio link impairment, step **l**. As indicated above, they may use a protocol or other mechanisms unique to these RLAs.

The RLA **36** uses the connection identifier **107** included in the received RLA frame to identify the connection associated with the element and uses the sequence number **115** to determine the temporal ordering of elements within the connection. Information elements meeting the QoS requirements associated with the RAN RLA **36** are delivered to MS connection **42**. The treatment accorded to information elements that do not meet the QoS requirements associated with the RLA **36** is dependent on the exception-handling behavior defined for this RLA (step **p**).

Numerous variations, modifications and adaptations may be made to the particular embodiments of the invention described above without departing from the scope of the invention as defined in its claims.

## Claims

1. A radio link system for multimedia communication with a mobile station (112), hereinafter referred to as MS, said radio link system comprising a radio access network (111), hereinafter referred to as RAN, said RAN comprising:
a RAN connection (31) end of a communication link for transmitting an information element, hereinafter referred to as IE, according to an IE class of service requirements;
**characterized in that** the RAN further comprises:
a plurality of RAN radio link adapter (34, 35, 36), hereinafter referred to as RLA, components, each RAN RLA being associated with an RLA class of service, for adapting said IE to a RAN frame format comprising destination address information and RLA information associated with said IE; and
a flow analyzer (10) for monitoring said communication link, procuring from said RAN said IE class of service requirements, selecting an RAN RLA component with an RLA class of service substantially identical to said IE class of service requirements and dynamically allocating said RAN RLA component to said connection end.

2. A radio link system as claimed in claim 1, wherein said IE class of service requirements include type of information ToI and quality of service QoS data.

3. A radio link system as claimed in claim 1, wherein said IE comprises at least one of data, voice, and video information units.

4. A radio link system as claimed in claim 1, wherein said RAN frame format comprises a frame header (105), an RLA header (110), and said IE (120).

5. A radio link system as claimed in claim 4, wherein said frame header comprises an RLA identification for selecting a corresponding MS RLA component at said MS, and a connection identification for said communication link, for associating said MS RLA with a corresponding connection at said MS.

6. A radio link system as claimed in claim 4, wherein said RLA header is used for communication between said RAN RLA component and said MS RLA component.

7. A radio link system as claimed in claim 1, further comprising a database for storing a plurality of said IE class of service requirements.

8. A radio link system as claimed in claim 7, further comprising a database with a list of each RLA component of the radio link system and said associated RLA class of service.

9. A radio link system for multimedia communication with a radio access network (111), hereinafter referred to as RAN, said radio link system comprising a mobile station (112), hereinafter referred to as MS, said MS comprising:
an MS connection end of a communication link for transmitting an information element, hereinafter referred to as IE, according to an IE class of service requirements;
**characterized in that** said MS further comprises:
a plurality of MS radio link adapter (44, 45, 46), hereinafter referred to as RLA, components, each MS RLA being associated with an RLA class of service for adapting said IE to an MS frame format for transmission over said communication link according to the class of service requirements associated with said IE.

10. A method for multimedia communication between a radio access network, hereinafter referred to as RAN, and a mobile station, hereinafter referred to as MS, comprising:
establishing a communication link for transmitting an information element, hereinafter referred to as IE, according to an IE class of service requirements, from a connection end in said RAN to a mate connection in said MS;
**characterized in that** the method further comprises the steps of:
monitoring said RAN connection for detecting said IE class of service requirements for a current transmission operation on said communication link;
providing a plurality of RAN radio link adapter, hereinafter referred to as RLA, components, each RAN RLA associated with an RLA class of service for loading said IE into a RAN frame format comprising destination address information and RLA information associated with said IE;
selecting a RAN RLA component from said plurality of RAN RLAs according to said IE class of service requirements; and
dynamically allocating said RAN RLA component to said RAN connection end.

11. A method as claimed in claim 10, further comprising re-allocating a new RAN RLA component to said connection end, whenever said IE class of service requirements change.

12. A method as claimed in claim 10, wherein said step of establishing a communication link comprises:
establishing a communication channel between said RAN connection end and said mate MS connection end; and
associating a default RAN RLA component to said RAN connection end.

13. A method as claimed in claim 10, further comprising providing RNA RLA identification data in said RAN frame for associating a paired MS RLA component to said mate MS connection end.

14. A method as claimed in claim 10, wherein said step of selecting comprises :
maintaining a database comprising a plurality of class of services requirements and a list with all said RAN RLA components and their associated RLA class of service;
comparing the RLA class of service with the IE class of service requirements;
detecting an RLA class of service substantially similar to said IE class of service requirements; and
selecting said RAN RLA component according to said detected RLA class of service.

15. A method as claimed in claim 14, wherein said database comprises bandwidth management policies.

16. A method as claimed in claim 14, wherein said database comprises information flow requirements.

17. A method as claimed in claim 10, wherein the step of dynamically allocating comprises selecting a new RAN RLA component whenever said IE class of service requirements change.

18. A method as claimed in claim 10, wherein said step of monitoring comprises determining any change in said class of service.

19. A method as claimed in claim 10, wherein said class of service includes type of information ToI for transfer and quality of service QoS data.

20. A method as claimed in claim 10, wherein said step of monitoring comprises:
determining a change in said IE class of service requirements; and
if said change refers to the type of information ToI carried by said IE, selecting a new RAN RLA component and allocating same to said RAN connection end.

21. A method as claimed in claim 20, wherein said step of monitoring comprises:
determining a change in said IE class of service requirements;
if said change refers to a decrease in the quality of service QoS provided to said IE, applying a correction protocol available to said RAN RLA; and
allocating a new RAN RLA component to said RAN connection end, based on said IE class of service requirements, if the decrease in quality of service QoS cannot be corrected with said correction protocol.

## Revendications

1. Système de liaison radio pour une communication multimédia avec une station mobile (112), désignée ci-après sous le nom de MS, ledit système de liaison radio comprenant un réseau d'accès radio (111), désigné ci-après sous le nom de RAN, ledit RAN comprenant :
une extrémité de connexion RAN (31) d'une liaison de communication destinée à émettre un élément d'information, désigné ci-après sous le nom d'IE, selon des conditions requises de classe de service d'IE ;
**caractérisé en ce que** le RAN comprend en outre :
une pluralité de composants d'adaptateurs de liaison radio RAN (34, 35, 36), désignés ci-après sous le nom de RLA, chaque RLA RAN étant associé à une classe de service de RLA, pour adapter ledit IE à un format de trame RAN comprenant des informations d'adresse de destination et des informations de RLA associées audit IE ; et
un analyseur de flot (10) destiné à contrôler ladite liaison de communication, obtenu depuis le RAN lesdites conditions requises de classe de service d'IE, sélectionner un composant RLA RAN avec une classe de service RLA sensiblement identique auxdites conditions requises de classe de service d'IE et attribuer de façon dynamique ledit composant RLA RAN à ladite extrémité de connexion.

2. Système de liaison radio selon la revendication 1, dans lequel lesdites conditions requises de classe de service d'IE comprennent des données de type d'information ToI et de qualité de service QoS.

3. Système de liaison radio selon la revendication 1, dans lequel ledit IE comprend au moins une parmi des unités d'informations de données, de voix et de vidéo.

4. Système de liaison radio selon la revendication 1, dans lequel ledit format de trame RAN comprend un en-tête de trame (105), un en-tête de RLA (110), et ledit IE (120).

5. Système de liaison radio selon la revendication 4, dans lequel ledit en-tête de trame comprend une identification de RLA destinée à sélectionner un composant RLA MS au niveau de ladite MS, et une identification de connexion pour ladite liaison de communication, destinée à associer ledit RLA MS à une connexion correspondante au niveau de ladite MS.

6. Système de liaison radio selon la revendication 4, dans lequel ledit en-tête RLA est utilisé pour une communication entre ledit composant RLA RAN et ledit composant RLA MS.

7. système de liaison radio selon la revendication 1, comprenant en outre une base de données destinée à stocker une pluralité desdites conditions requises de classe de service d'IE.

8. Système de liaison radio selon la revendication 7, comprenant en outre une base de données avec une liste de chaque composant RLA du système de liaison radio et ladite classe de service de RLA associée.

9. Système de liaison radio pour une communication multimédia avec un réseau d'accès radio (111), désigné ci-après sous le nom de RAN, ledit système de liaison radio comprenant une station mobile (112), désigné ci-après sous le nom de MS, ladite MS comprenant :
une extrémité de connexion MS d'une liaison de communication destinée à émettre un élément d'information, désigné ci-après sous le nom d'IE, selon des conditions
requises de classe de service d'IE ;
**caractérisé en ce que** ladite MS comprend en outre :
une pluralité de composants d'adaptateurs de liaison radio MS (44, 45, 46), désignés ci-après sous le nom de RLA, chaque RLA MS étant associé à une classe de service de RLA pour adapter ledit IE à un format de trame MS pour une émission sur la liaison de communication selon les conditions requises de classe de service associées audit IE.

10. Procédé pour une communication multimédia entre un réseau d'accès radio, désigné ci-après sous le nom de RAN, et une station mobile, désignée ci-après sous le nom de MS, comprenant les étapes consistant à :
établir une liaison de communication destinée à émettre un élément d'information, désigné ci-après sous le nom d'IE, selon des conditions requises de classe de service d'IE, depuis une extrémité de connexion dans ledit RAN vers une connexion associée dans ladite MS ;
**caractérisé en ce que** le procédé comprend en outre les étapes consistant à :
contrôler ladite connexion RAN pour détecter lesdites conditions requises de classe de service d'IE pour une opération d'émission en cours sur ladite liaison de communication ;
fournir une pluralité de composants d'adaptateurs de liaison radio RAN, désignés ci-après sous le nom de RLA, chaque RLA RAN associé à une classe de service RLA pour charger ledit IE dans un format de trame RAN comprenant des informations d'adresse de destination et des informations RLA associées audit IE ;
sélectionner un composant RLA RAN depuis ladite pluralité de RLA RAN selon lesdites conditions requises de classe de service d'IE ; et
attribuer de façon dynamique ledit composant RLA RAN à ladite extrémité de connexion RAN.

11. Procédé selon la revendication 10, comprenant en outre l'étape consistant à réattribuer un nouveau composant RLA RAN à ladite extrémité de connexion, dès lors que lesdites conditions requises de classe de service d'IE changent.

12. Procédé selon la revendication 10, dans lequel l'étape consistant à établir une liaison de communication comprend les étapes consistant à :
établir un canal de communication entre ladite extrémité de connexion RAN et ladite extrémité de connexion MS associée ; et
associer un composant RLA RAN par défaut à ladite extrémité de connexion RAN.

13. Procédé selon la revendication 10, comprenant en outre l'étape consistant à fournir des données d'identification RLA RNA dans ladite trame RAN pour associer un composant RLA MS en paire à ladite extrémité de connexion MS associée

14. Procédé selon la revendication 10, dans lequel ladite étape de sélection comprend les étapes consistant à :
entretenir une base de données comprenant une pluralité de conditions requises de classe de services et une liste avec tous lesdits composants RLA RAN et leur classe de service RLA associée ;
comparer la classe de service RLA avec les conditions requises de classe de service d'IE ;
détecter une classe de service sensiblement similaire auxdites conditions requises de classe de service d'IE ; et
sélectionner ledit composant RLA RAN selon ladite classe de service RLA détectée.

15. Procédé selon la revendication 14, dans lequel ladite base de données comprend des politiques de gestion de largeur de bande.

16. Procédé selon la revendication 14, dans lequel ladite base de données comprend des conditions requises de flot d'informations.

17. Procédé selon la revendication 10, dans lequel l'étape d'attribution dynamique comprend l'étape consistant à sélectionner un nouveau composant RLA RAN dès lors que lesdites conditions requises de classe de service d'IE changent.

18. Procédé selon la revendication 10, dans lequel ladite étape de contrôle comprend une étape consistant à déterminer un quelconque changement dans ladite classe de service.

19. Procédé selon la revendication 10, dans lequel ladite classe de service comprend des données de type d'information ToI pour le transfert et de qualité de service QoS.

20. Procédé selon la revendication 10, dans lequel ladite étape de contrôle comprend des étapes consistant à :
déterminer un changement dans lesdites conditions requises de classe de service d'IE ; et
si ledit changement se rapporte au type d'information ToI transporté par ledit IE, sélectionner un nouveau composant RLA RAN et attribuer celui-ci à ladite extrémité de connexion RAN.

21. Procédé selon la revendication 20, dans lequel ladite étape de contrôle comprend les étapes consistant à :
déterminer un changement dans lesdites conditions requises de classe de service d' IE ;
si ledit changement se rapporte à une diminution de la qualité de service QoS fournie audit IE, appliquer un protocole de correction disponible pour ledit RLA RAN ; et
attribuer un nouveau composant RLA RAN à ladite extrémité de connexion RAN, en fonction desdites conditions requises de classe de service d'IE, si la réduction de qualité de service QoS ne peut pas être corrigée avec ledit protocole de correction.

## Patentansprüche

1. Funkstreckensystem zur Multimedien-Kommunikation mit einer mobilen Station (112), nachfolgend als MS bezeichnet, wobei das Funkstreckensystem ein Funk-Zugangsnetzwerk (110), nachfolgend als RAN bezeichnet, umfasst, wobei das RAN Folgendes umfasst:
ein RAN-Verbindungs- (31) Ende einer Kommunikations-Verbindungsstrecke zur Aussendung eines Informationselementes, nachfolgend als IE bezeichnet, entsprechend einer IE-Klasse von Dienstanforderungen;
**dadurch gekennzeichnet, dass** das RAN weiterhin Folgendes umfasst:
eine Vielzahl von RAN-Funkstrecken-Adapter- (34, 35, 36), nachfolgend als RLA bezeichnet, Komponenten, wobei jede RAN RLA einer RLA-Dienstklasse zugeordnet ist, um das IE an ein RAN-Rahmenformat anzupassen, das Zieladressen-Information und RAL-Information in Zuordnung zu dem IE umfasst; und
einen Datenfluss-Analysator (10) zur Überwachung der Kommunikations-Verbindungsstrecke, zur Beschaffung der IE-Dienstklasse-Anforderungen von dem RAN, zur Auswahl einer RAN-RLA-Komponente mit einer RLA-Dienstklasse, die im Wesentlichen identisch zu den IE-Dienstklassen-Anforderungen ist und zur dynamischen Zuteilung der RAN-RLA-Komponente zu dem Verbindungs-Ende.

2. Funkstreckensystem nach Anspruch 1, bei dem die IE-Dienstklassen-Anforderungen Informationstyp-, Tol-, und Dienstgüte-, QoS-, Daten einschließen.

3. Funkstreckensystem nach Anspruch 1, bei dem das IE zumindest eines von Daten-, Sprache- und Video-Informationseinheiten umfasst.

4. Funkstreckensystem nach Anspruch 1, bei dem das RAN-Rahmenformat ein Rahmen-Kopffeld (105), ein RLA-Kopffeld (110) und das IE (120) umfasst.

5. Funkstreckensystem nach Anspruch 4, bei dem das Rahmen-Kopffeld eine RLA-Identifikation zur Auswahl einer entsprechenden MS-RLA-Komponente an der MS und eine Verbindungs-Identifikation für die Kommunikations-Verbindungsstrecke zur Zuordnung der MS RLA zu einer entsprechenden Verbindung an der MS umfasst.

6. Funkstreckensystem nach Anspruch 4, bei dem das RLA-Kopffeld zur Kommunikation zwischen der RAN-RLA-Komponente und der MS-RLA-Komponente verwendet wird.

7. Funkstreckensystem nach Anspruch 1, das weiterhin eine Datenbank zum Speichern einer Vielzahl der IE-Dienstklassen-Anforderungen umfasst.

8. Funkstreckensystem nach Anspruch 7, das weiterhin eine Datenbank mit einer Liste jeder RLA-Komponente des Funkstreckensystems und der zugehörigen RLA-Dienstklasse umfasst.

9. Funkstreckensystem für die Multimedien-Kommunikation mit einem Funkzugangs-Netzwerk (111), nachfolgend als RAN bezeichnet, wobei das Funkstreckensystem eine Mobilstation (112), nachfolgend als MS bezeichnet, umfasst, wobei die MS Folgendes umfasst:
ein MS-Verbindungs-Ende einer Kommunikations-Verbindungsstrecke zur Aussendung eines Informationselementes, nachfolgend als IE bezeichnet, entsprechend einer IE-Dienstklassen-Anforderung;
**dadurch gekennzeichnet, dass** die MS weiterhin Folgendes umfasst:
eine Vielzahl von MS-Funkstrecken-Adapter- (44, 45, 46), nachfolgend als RLA bezeichnet, Komponenten, wobei jede MS-RLA einer RLA-Dienstklasse zugeordnet ist, zur Anpassung der IE an ein MS-Rahmenformat zur Aussendung über die Kommunikations-Verbindungsstrecke entsprechend der Dienstklassen-Anforderungen, die dem IE zugeordnet sind.

10. Verfahren zur Multimedien-Kommunikation zwischen einem Funkzugangs-Netzwerk, nachfolgend als RAN bezeichnet, und einer Mobilstation, nachfolgend als MS bezeichnet, mit:
Ausbilden einer Kommunikations-Verbindungsstrecke zur Aussendung eines Informationselementes, nachfolgend als IE bezeichnet, entsprechend einer IE-Dienstklassen-Anforderung, von einem Verbindungs-Ende in dem RAN zu einer angepassten Verbindung in der MS;
**dadurch gekennzeichnet, dass** das Verfahren weiterhin die folgenden Schritte umfasst:
Überwachen der RAN-Verbindung zur Detektion der IE-Dienstklassen-Anforderungen für eine laufende Übertragungsoperation auf der Kommunikations-Verbindungsstrecke;
Bereitstellen einer Vielzahl von RAN-Funkstrecken-Adapter-, nachfolgend als RLA bezeichnet, Komponenten, wobei jede RAN-RLA einer RLA-Dienstklasse zugeordnet ist, zum Laden des IE in ein RAN-Rahmenformat, das Zieladressen-Information und RLA-Information umfasst, die dem IE zugeordnet sind;
Auswahl einer RAN-RLA-Komponente aus der Vielzahl von RAN-RLA's entsprechend der IE-Dienstklassen-Anforderungen; und
dynamisches Zuteilen der RAN-RLA-Komponente zu dem RAN-Verbindungs-Ende.

11. Verfahren nach Anspruch 10, das weiterhin die Neuzuteilung einer neuen RAN-RLA-Komponente zu dem Verbindungs-Ende jedesmal dann umfasst, wenn sich die IE-Dienstklassen-Anforderungen ändern.

12. Verfahren nach Anspruch 10, bei dem der Schritt des Ausbildens einer Kommunikations-Verbindungsstrecke Folgendes umfasst:
Ausbilden eines Kommunikationskanals zwischen dem RAN-Verbindungsende und dem zugehörigen MS-Verbindungsende; und
Zuordnen einer Vorgabe-RAN-RLA-Komponente zu dem RAN-Verbindungs-Ende.

13. Verfahren nach Anspruch 10, das weiterhin die Lieferung von RNA-RLA-Identifikationsdaten in dem RAN-Rahmen zur Zuordnung einer gepaarten MS RLA-Komponente zu dem zugehörigen MS-Verbindungs-Ende umfasst.

14. Verfahren nach Anspruch 10, bei dem der Schritt der Auswahl Folgendes umfasst:
Führen einer Datenbank mit einer Vielzahl von Dienstklassen-Anforderungen und einer Liste mit allen den RAN-RLA-Komponenten und ihrer zugehörigen RLA-Dienstklasse;
Vergleichen der RLA-Dienstklasse mit den IE-Dienstklassen-Anforderungen;
Feststellen einer RLA-Dienstklasse, die im Wesentlichen ähnlich zu den IE-Dienstklassen-Anforderungen ist; und
Auswahl der RAN-RLA-Komponente entsprechend der festgestellten RLA-Dienstklasse.

15. Verfahren nach Anspruch 14, bei dem die Datenbank Bandbreiten-Verwaltungs-Richtlinien umfasst.

16. Verfahren nach Anspruch 14, bei dem die Datenbank Informationsfluss-Anforderungen umfasst.

17. Verfahren nach Anspruch 10, bei dem der Schritt des dynamischen Zuteilens die Auswahl einer neuen RAN-RLA-Komponente jedesmal dann umfasst, wenn sich die IE-Dienstklassen-Anforderungen ändern.

18. Verfahren nach Anspruch 10, bei dem der Schritt der Überwachung die Feststellung irgendeiner Änderung der Dienstklasse umfasst.

19. Verfahren nach Anspruch 10, bei dem die Dienstklasse Informationstyp-, Tol-, Daten für die Übertragung und Dienstgüte-, QoS-, Daten umfasst.

20. Verfahren nach Anspruch 10, bei dem der Schritt der Überwachung Folgendes umfasst:
Feststellen einer Änderung der IE-Dienstklassen-Anforderungen; und
wenn sich die Änderung auf den von dem IE übertragenen Informationstyp, Tol, bezieht, Auswahl einer neuen RAN-RLA-Komponente und deren Zuteilung zu dem RAN-Verbindungs-Ende.

21. Verfahren nach Anspruch 20, bei dem der Schritt der Überwachung Folgendes umfasst:
Feststellen einer Änderung der IE-Dienstklassen-Anforderungen;
wenn sich die Änderung auf eine Verringerung der Dienstgüte, QoS, bezieht, die für das IE bereitgestellt wird, Anwenden eines Korrekturprotokolls, das dem RAN-RLA zur Verfügung steht; und
Zuteilen einer neuen RAN-RLA-Komponente zu dem RAN-Verbindungs-Ende auf der Grundlage der IE-Dienstklassen-Anforderungen, wenn die Verringerung der Dienstgüte, QoS, nicht mit dem Korrekturprotokoll korrigierbar ist.
